# EUROPEAN PATENT SPECIFICATION

(11) **EP 3 221 611 B1**
(45) Date of publication and mention of the grant of the patent: **26.12.2018**
(21) Application number: 15797666.3
(22) Date of filing: 19.11.2015
(51) Int. Cl.: F16F 9/43

(54) **DEVICE FOR FILLING A SHOCK ABSORBER**
VORRICHTUNG ZUM FÜLLEN EINES STOSSDÄMPFERS
DISPOSITIF DE REMPLISSAGE D'UN ABSORBEUR DE CHOC

(30) Priority: 19.11.2014 SE 1451393
(43) Date of publication of application: 27.09.2017
(73) Proprietor: ÖHLINS RACING AB, 119 27 Upplands Väsby (SE)
(72) Inventor: SÖDERDAHL, Johan, S-167 63 Bromma (SE)
(74) Representative: AWA Sweden AB
(86) International application number: PCT/EP2015/077149
(87) International publication number: WO 2016/079258

(56) References cited:
- DE-U1- 29 808 756
- US-A- 4 865 156
- US-A- 5 255 708
- US-A- 5 546 979
- US-A1- 2002 134 458

## Description

### Technical field

The present specification generally relates to the field of devices for filling vehicle shock absorbers and in particularly discloses such a device comprising a first state wherein said device acts as a vacuum pump and a second state wherein said device is adapted to fill said shock absorber with a fluid.

### Technical background

Suspension systems for vehicles such as cars, all terrain vehicles, motorcycles or bicycles, commonly comprise shock absorbing structures or dampers. Such shock absorbers normally comprise a working cylinder filled with a damping fluid, such as hydraulic oil, and a piston arranged in the cylinder and are arranged to move telescopically between the vehicle chassis and the wheel. The movement of the wheel and vehicle is damped by the piston moving in the cylinder against the resistance of the fluid, which further causes damping fluid to move in the damping cylinder.

In order to fill such shock absorbers or dampers with damping fluid, or oil, rather complex devices are known in the art. Examples include devices in need of for example electric power, devices using compressed air or the like. Such devices tend to further, apart from deploying complex technology, be large and more or less immobile devices that are mainly suitable for stationary use in for example production facilities and workshops.

Document US 5 255 708 A1 discloses a prior art device for filling a shock absorber for a vehicle according to the pre-amble of claim 1.

However, a need has arisen among users of such shock absorbers to be able to fill shock absorbers in a convenient and simple manner also when "in field", where for example electricity may not be available.

A smaller, lighter device is thus required for filling shock absorbers, or any other hydraulic systems, that offers an increased level of mobility, preferably in a manner not requiring external power sources. It is also advantageous if the device is convenient to handle for a user.

### Summary of the invention

The above-mentioned requirements are achieved by the present invention according to the independent claims. Preferred embodiments are set forth in the dependent claims.

The present invention is based on the insight that a device for filling shock absorbers, or other hydraulic systems, may be designed in a surprisingly compact and simple way to be utilized without external power sources due to a simultaneous activation of an inventive check valve functionality while performing a manual reciprocating motion, i.e. a manual pumping. The device may therefore advantageously be used to fill for example a shock absorber for a vehicle also "in-field". Additional further developments will be apparent from the following aspects and embodiment of the invention, as well as from the appended claims.

According to a first aspect of the invention a device for filling a shock absorber for a vehicle with a fluid is provided. The shock absorber comprising a cylinder adapted to accommodate said fluid, said device having a first state, wherein said device is adapted to provide a vacuum in said cylinder, and a second state, wherein said device is adapted to fill said cylinder with said fluid. The device comprises a hollow body comprising a first body portion and a second body portion, at least one rod arrangement adapted to reciprocate between at least first position FP1 and a second position FP2. When in said first state, said rod arrangement is adapted to act as a vacuum pump such that pressure equalization between said first and second body portion alternately takes place.

According to one embodiment a device for filling a shock absorber for a vehicle with a first fluid is provided. The shock absorber comprising a cylinder adapted to accommodate the first fluid, the device having a first state, wherein the device is adapted to provide a vacuum in the cylinder, and a second state, wherein the device is adapted to fill the cylinder with the first fluid. The device comprises a hollow body comprising a first body portion and a second body portion, means for providing a fluid connection between the shock absorber and the hollow body and at least one rod arrangement arranged to extend at least partly through the first body portion and the second body portion and adapted to reciprocate between at least first position FP1 and a second position FP2. When in the first state, the rod arrangement is adapted to remove a second fluid from the cylinder to the hollow body to provide a vacuum in the cylinder, whereby the rod arrangement acts as a vacuum pump by means of the reciprocation between the at least first position FP1 and the at least second position FP2, such that pressure equalization between the first and the second body portion alternately takes place.

According to one embodiment, the second fluid is air; this may for example be the case when a new shock absorber is to be filled by means of the device. According to one embodiment, the second fluid is nitrogen gas; this may for example be the case when a shock absorber is to be refilled. During use of a shock absorber pressurized by nitrogen gas, nitrogen gas tends to leak to the compartment (i.e. the cylinder) of the shock absorber from where the second fluid is evacuated by means of the device of the present specification in order to create a vacuum prior to filling the device. Accordingly, nitrogen gas must be removed from the shock absorber by the device in such a case. The skilled person realizes that any ratio of mixture of the fluids air and nitrogen gas may thus prevail in the shock absorber. Further, any other suitable type of gas is conceivable within the scope of the present specification.

In one embodiment, the first fluid is hydraulic oil.
The skilled person further realizes that by the feature, or term, air, a fluid comprising predominately air is to be understood. In a practical situation, small amounts, or traces, of other fluids such as for example oil may be present in the flow of air without departing from the scope of the invention. Similarly, in the case of the second fluid being nitrogen gas, small amounts, or traces, of other fluids such as for example oil may be present in the nitrogen gas. This applies with respect to the above described aspects and embodiments, as well as with respect to the following embodiments, and further throughout the present specification.

Further, the skilled person realizes that by the feature, or term, fluid as used in the following embodiments, a fluid such as for example nitrogen gas, air or oil is to be understood. More particularly, a flow of fluid extracted from the shock absorber in the following embodiments may refer to a flow of gas, such as nitrogen gas, or air, although any other suitable gas may be contemplated within the scope of the invention. A flow of fluid allowed into the shock absorber may refer to a flow of fluid such as hydraulic oil.

In one embodiment, wherein, when in said second state, said rod arrangement is adapted to feed said fluid from said hollow body to said shock absorber. Thus, the device has a plurality of functions, i.e. acting as a vacuum pump and filling said shock absorber with fluid. In one embodiment, the flow of fluid is a flow of said first fluid. In one embodiment, the device is adapted to feed said fluid to said shock absorber by means of a pressure differential drawing the fluid from the reservoir into the device and further into the shock absorber. The pressure differential prevails due to the vacuum provided by the device when said rod arrangement acts as a vacuum pump.

In one embodiment, said rod arrangement extends at least partly through said first body portion and said second body portion.

In one embodiment, the device comprises a first fluid connection adapted to selectively allow a flow of fluid between said first and second body portions. In one embodiment, the flow of fluid is a flow of said second fluid. In one embodiment, said fluid flow is an air flow, in one embodiment, said fluid flow is flow of nitrogen gas.

In one embodiment, said rod arrangement comprises a first rod, arranged at least partly in said first body portion and adapted to reciprocate between said first position FP1 and said second position FP2 and a second rod, arranged at least partly in said second body portion and adapted to reciprocate between a first position SP1 and a second position SP2, and wherein said rod arrangement comprises a releasable coupling adapted to releasably couple said first and said second rod.

In one embodiment, said releasable coupling is adapted to releasably couple the first rod and the second rod such that the rods are coupled at least when the first rod is in the first position FP1 and the second rod is in the first position SP1.

In one embodiment, said releasable coupling is adapted to releasably couple the first rod and the second rod such that the rods are decoupled at least when the second rod is in the second position SP2.

In one embodiment, said first fluid connection allows a flow of fluid between said first and second body portions when said second rod is positioned in a predetermined position. In one embodiment, the flow of fluid is a flow of said second fluid. In one embodiment, said fluid flow is an air flow; in one embodiment said fluid flow is a flow of nitrogen gas.

In one embodiment, said fluid connection allows a flow of fluid between said first and second body portions when said first rod is positioned in a predetermined position. In one embodiment, the flow of fluid is a flow of said second fluid. In one embodiment, said fluid flow is an air flow; in one embodiment said fluid flow is a flow of nitrogen gas.

In one embodiment, a fluid flow is allowed to flow between said first body portion and said second body portion at least when said first rod is in said second position FP2. In one embodiment, the flow of fluid is a flow of said second fluid. In one embodiment, said fluid flow is an air flow. In one embodiment said fluid flow is flow of nitrogen gas.

In one embodiment, a fluid flow is substantially prevented to flow between said first body portion and said second body portion at least when said second rod is in said first position SP1, or said first rod is in said first position FP1. In one embodiment, the flow of fluid is a flow of said second fluid. In one embodiment, said fluid flow is an air flow; in one embodiment said fluid flow is flow of nitrogen gas.

In one embodiment, said device comprises a spring adapted to bias said first rod towards the first position.

In one embodiment, said device comprises a reservoir fluid connection, adapted to connect at least said first body portion to a reservoir when in said second state, said reservoir adapted to comprise said fluid. In one embodiment, the reservoir is adapted to comprise said first fluid.

In one embodiment, said device comprises a reservoir fluid connection, adapted to connect at least said first body portion to said shock absorber cylinder, such that said fluid may be transferred to said shock absorber cylinder.

In one embodiment, said releasable coupling means are automatically operable between a coupled state, wherein said first and second rod are coupled, and a decoupled state wherein said first and second rod are decoupled.
In one embodiment, a length of said first and second body portion and a length of said first and second rods are adapted to each other such that, when said rods are coupled, a first end of said first rod reaches a mechanical stop in said second position FP2 prior to that a first end 17a of the second rod reaches said second position SP2.

In one embodiment, said releasable coupling comprises a magnet. However, other embodiments may include other releasable couplings, such as a friction coupling or any other similar coupling.

In one embodiment, said device comprises a third fluid connection adapted to allow a flow of gas and/or fluid to escape out from the second body portion. However, the third fluid connection may in some embodiments be connected to the first body portion. In one embodiment, the flow of fluid is a flow of said second fluid. In one embodiment, the flow of fluid is flow of air; in one embodiment said fluid flow is flow of nitrogen air.

In one embodiment, said third fluid connection comprises a flow adjusting device.

In one embodiment, said device further comprises means for causing said rod arrangement to reciprocate. In some embodiments, such means may comprise for example a handle, a knob a hand grip or other suitable means for inducing a reciprocating motion to said rod arrangement.

In one embodiment, said device further comprises means for adjusting a fluid level in said shock absorber, when said device is in said second state.

In one embodiment, said means for adjusting a final fluid level in said shock absorber comprises at least one hole, arranged in said second rod, and at least one pin adapted to fit in said hole, such that the position of the second rod is positioned in a predetermined position.

According to another aspect a method for filling a shock absorber with a device as described above is provided. The method comprising:
- attaching said second fluid connection to a shock absorber to be filled;
- setting the device in said first state;
- reciprocating said rod arrangement such that a vacuum is provided in said shock absorber via said fluid connection;
- switching said device to said second state;
- filling said shock absorber with said fluid via said fluid connection.

In one embodiment, said method further comprises:
- prior to switching said device to said second state, adjusting the position of the first end of the second rod with respect to the first position SP1 with said means for adjusting a final fluid level.
Thereby a final adjusting amount of oil is provided in the device. When the shock absorber has been filled up, the adjusting amount of oil may be pushed into the shock absorber with said second rod, using said handle, such that a desired amount of oil is added in the shock absorber.

Further objectives of, features of and advantages with the present invention will become apparent when studying the following detailed disclosure, the drawings and the appended claims. Those skilled in the art realize that different features of the present invention can be combined to create embodiments other than those described in the following.

### Short description of the appended drawings

The invention is described in the following illustrative and non-limiting detailed description of exemplary embodiments, with reference to the appended drawings, wherein:
Figure 1 shows an embodiment of the device.
Figure 2 shows the embodiment of Fig. 1 in a compact packed up state, suitable for example for transportation.
Figure 3 is a cross sectional view of an embodiment of the device according to the invention.
Figure 4 is a cross sectional view of an embodiment of the device according to the invention, which shows the flow of fluid through the device when in the first state.

All figures are schematic, not necessarily to scale, and generally only show parts which are necessary in order to elucidate the invention, wherein other parts may be omitted or merely suggested. Throughout the figures the same reference signs designate the same, or essentially the same features.

### Detailed description of preferred embodiment of the invention

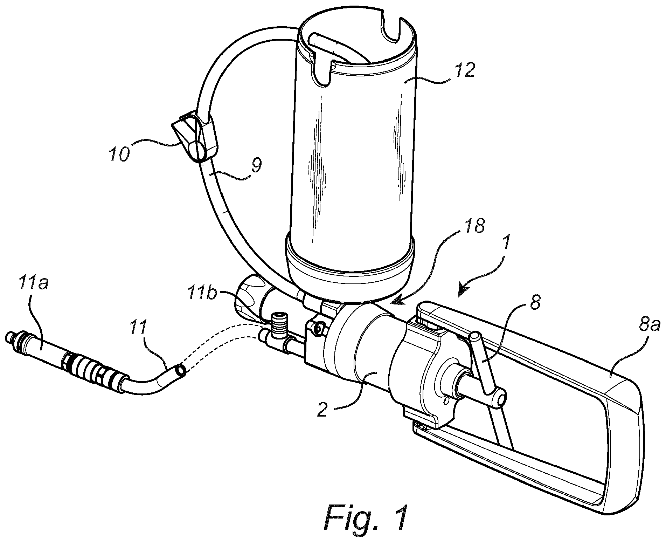

Figure 1 shows the device 1 for filling a shock absorber according to one embodiment of the invention together with a reservoir 12. The device 1 is adapted to fill a shock absorber, or any other hydraulic system, with oil or other fluid from the reservoir 12. The illustrated device 1 comprises a hollow body 2, or a cylinder 2. Further, the device 1 comprises a plurality of fluid connections 9, 11, 14 and 18, in the illustrated case the second fluid connection 11 comprises a flexible hose 11, such as for example a plastic hose. One of said fluid connections, a reservoir fluid connection 18, connects the cylinder 2 to a reservoir 12 and the second fluid connection 11 is adapted to connect the cylinder 2 to the shock absorber to be filled with fluid. Such a connection is achieved by suitable connecting means 11a arranged at the end of the hose 11. The illustrated embodiment further includes means 11b for attaching a pressure gauge or similar, should an exact reading of the prevailing pressure be of interest.

Furthermore, the device 1 comprises a third fluid connection 9 comprising a flow adjusting device 10, this flow adjusting device is adapted to allow a flow of fluid, for example air, from the cylinder 2 to the ambient air. The skilled person realizes that by the feature, or term, a flow of air, a flow of fluid comprising predominately air is to be understood. In a practical situation, small amount, or traces, of other fluids such as for example oil may be present in the flow of air without departing from the scope of the invention. The skilled person further realizes that any other suitable gas that may be present in the shock absorber may be allowed from the cylinder according to what is described above. Examples include for example nitrogen gas. This may for example be the case when utilizing the device for re-filling of a shock absorber. In accordance with what has been described above with respect to air, such a gas flow may also comprise small amounts, or traces, of for example oil. This applies throughout the present specification.

The flow adjusting device 10 may for example be adapted to be switched between two states, one opened stated, wherein fluid is allowed to pass, and one closed state. A rod arrangement 5, adapted to reciprocate within the cylinder, is shown extending from a first end of the cylinder 2. The rod arrangement is connected to a means 8 for causing the rod to reciprocate, i.e. to perform a pumping motion, in the illustrated case a handle 8. The handle 8 is surrounded by a frame 8a.

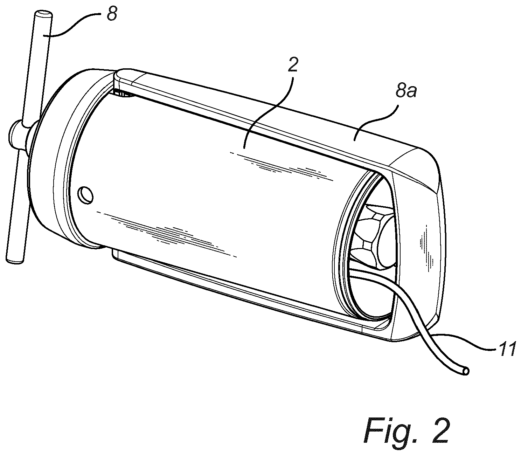

Fig. 2 shows the device 1 of Fig. 1 and the reservoir 12 in a folded, or packed up, state suitable for example for transportation or storage. As shown, the design of the device 1 is such that all parts may be conveniently packed up such that mobility and in-field use is facilitated.

A filling operation carried out using the device 1 is based on the idea of connecting the hollow body 2, preferably a cylinder, of the device 1 to the shock absorber to be filled and to the reservoir 12. A vacuum is created in the hollow body 2 and hence the connected shock absorber by a reciprocating movement, or pumping action, involving the rod arrangement 5 and the handle 8. The pumping action being adapted to remove the air from the hollow body 2 and hence the connected shock absorber, via the second fluid connection 11. This action is followed by a switching of the device from the first state to the second state, such that oil from the reservoir 12 is instead drawn into the hollow body 2 and further to the shock absorber from the reservoir 12 due to the pressure differential (i.e. the vacuum). In the first state, the operation is made possible due to an inventive built-in check valve functionality of the device, i.e. a first fluid connection 14, designed to activate the check-valve functionality during the pumping action, in the illustrated case utilizing a spring and a magnet. In other words, the device 1 has a first state, wherein the device 1 is adapted to provide a vacuum in the cylinder of the shock absorber, and a second state, wherein the device is adapted to fill the cylinder with the fluid. The device 1 comprises a hollow body 2 comprising a first body portion 3 and a second body portion 4, at least one rod arrangement 5 adapted to reciprocate between at least first position FP1 and a second position FP2, wherein, when in the first state, the rod arrangement is adapted to act as a vacuum pump such that a pressure equalization between the first and second body portion 3, 4 alternately takes place. Further, when in the second state, the rod arrangement 5 is adapted to feed said fluid from said hollow body 2 to said shock absorber, i.e. to the cylinder of the shock absorber. Additionally, variations to the disclosed embodiments can be understood and effected by the skilled person in practicing the claimed invention, from a study of the drawings, the disclosure, and the appended claims. For example, the skilled person understands the applicability of the claimed invention with regards to the filling of related products such as for example a front fork or a steering damper of a vehicle. Further, the possible application of the disclosed embodiments for example for filling fluid systems of for example power steering systems, different types of compressors and refrigerators is readily understood from the present specification.

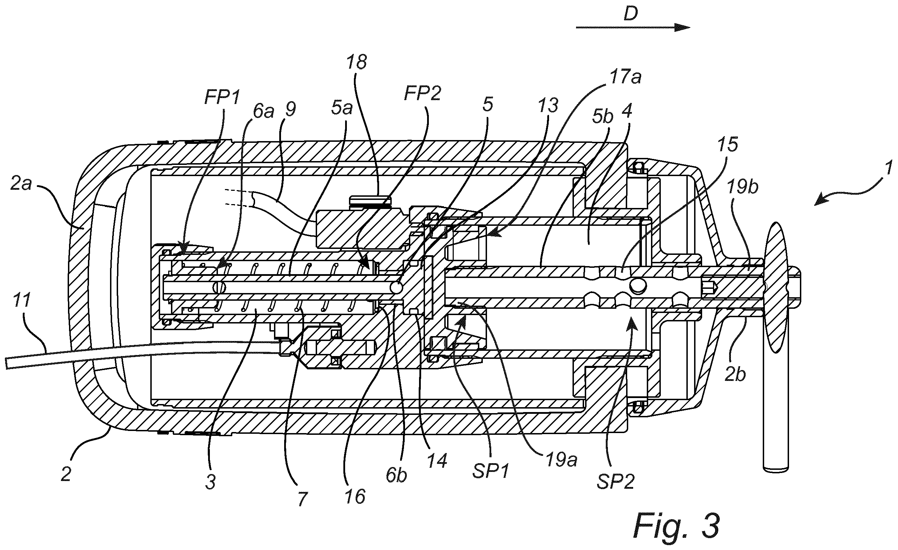

A more detailed description of the device 1 and this functionality will now be made with reference to Fig. 3. The hollow body, or cylinder, 2 of the device 1 comprises a first portion 3 and a second portion 4.

A rod arrangement 5, comprising a first rod 5a and a second rod 5b, extends partly through said first body portion and said second body portion. The rod arrangement comprises a first rod 5a, arranged primarily in said first body portion 3 and adapted to reciprocate between the first position FP1 and the second position FP2 and a second rod 5b, arranged primarily in said second body portion 4 and adapted to reciprocate between a first position SP1 and a second position SP2. Furthermore, the rod arrangement 5 comprises a releasable coupling 13 adapted to releasably couple said first and said second rod.

The first rod 5a comprises a first end 6a, arranged primarily in the first body portion 3, and the second rod 5b comprises a second end 19b, the second end 19b extends through a second 2b end of the cylinder 2. The second rod 5b further comprising a first end 19a arranged primarily in the second body portion 4.

The first rod 5a is adapted to reciprocate between a second position FP2, wherein the first end 6a of the rod 5a is positioned near the middle of the hollow body 2, and a first position FP1, wherein the first end 6a is near the first end 2a of the cylinder 2. The second rod 5b is in turn adapted to reciprocate between a first position SP1, wherein the first end 19a of the rod 5b is positioned near the middle of the hollow body 2 and a second position SP2, wherein the first end 19a is positioned near the second end 2b of the body 2. The first rod 5a is further biased towards the first position FP1 by a spring 7.

The second rod 5b is at the end 19b extending out from the hollow body 2 and connected to a handle 8, hereby the rod 5b may be moved back and forth in a reciprocating manner, i.e. a pumping manner, by a user utilizing the handle 8.

A releasable coupling 13 is arranged to releasably couple the first and second rods 5a, 5b. The releasable coupling 13 in the illustrated case comprises a magnetic coupling 13, arranged partly at the first end 19a of the second rod 5b and partly at the second end 6b of the first rod 5a. In other words, when in proximity of one another the first rod 5a and second rod 5b may be coupled by a magnetic force. When the first and second rod 5a, 5b are coupled by this magnetic force, the reciprocating motion induced on the first rod 5a is coupled to the motion of the second rod 5b which will consequently also reciprocate. The magnetic force, which couples the first rod 5a and the second rod 5b must be greater than the force biasing the first rod 5a towards the first position FP1, such that the first rod 5a and the second rod 5b, are not decoupled before the first end 6a of the first rod 5a hits a mechanical stop 16 during the reciprocal movement. When the first end 6a of the first rod 5a hits the mechanical stop 16, the second end 6b of the first rod 5a is decoupled from the first end 19a of the second rod 5b. This, because the second rod 5b is allowed to be moved further in a direction D, before the first end 19a of the second rod 5b hits a mechanical stop in the second body portion. Thus, a distance is achieved between the magnetic portions such that the first rod 5a and the second rod 5b are decoupled. The first rod 5a thereafter moves in a direction opposite to the direction D due to the action of the spring 7.

The first and second rod 5a, 5b are coupled at least when the first rod 5a is in the first position FP1 and the second rod 5b is in the first position SP1. In other words, the rods are coupled by the magnetic coupling at least when the respective rod ends 6a and 19a are positioned substantially in the middle of the cylinder 2. Correspondingly, the first and second rod 5a, 5b are decoupled at least when the second rod 5b is in the second position SP2. In other words, the rods are decoupled at least when the first end 19a of the second rod 5b is positioned closer to the second end 2b of the hollow body 2.

Further, the device comprises a fluid connection 14 adapted to selectively allow a flow of fluid between the first portion 3 and the second portion 4 of the hollow body 2. This flow of fluid is allowed or hindered depending on the position of the first and second rod 5a, 5b.

Turning to the simultaneous action of the built-in check valve functionality and the pumping action, the motion of the rod 5a will in a coupled state follow the reciprocating, or pumping, motion of the rod 5b induced by the handle 8. However, due to the bias of the spring 7 induced on rod 5a, urging rod 5a towards the first position FP1, i.e. towards the decoupled state, the rod 5a will only follow the reciprocating motion of rod 5b in the direction D towards the second end 2b of the hollow body 2 partially through the stroke of rod 5. When the force from the biasing spring 7 exceeds the coupling force, or the first rod hits a mechanical stop 16, exercised by the magnetic coupling 13, the second rod 5b will separate from the first rod 5a and return to the first position.

As long as the coupling is maintained and the rods 5a, 5b are moved a distance from their first positions FP1, SP1, a flow is allowed between portion 3 and portion 4. When the rod 5a is returned to the first position FP1 however, the fluid connection 14 is closed and hence the rod 5a acts as a check valve. These states take place due to the force balance between the magnetic force and the biasing spring during the stroke of the reciprocating rod 5b, and thus during the pumping action.

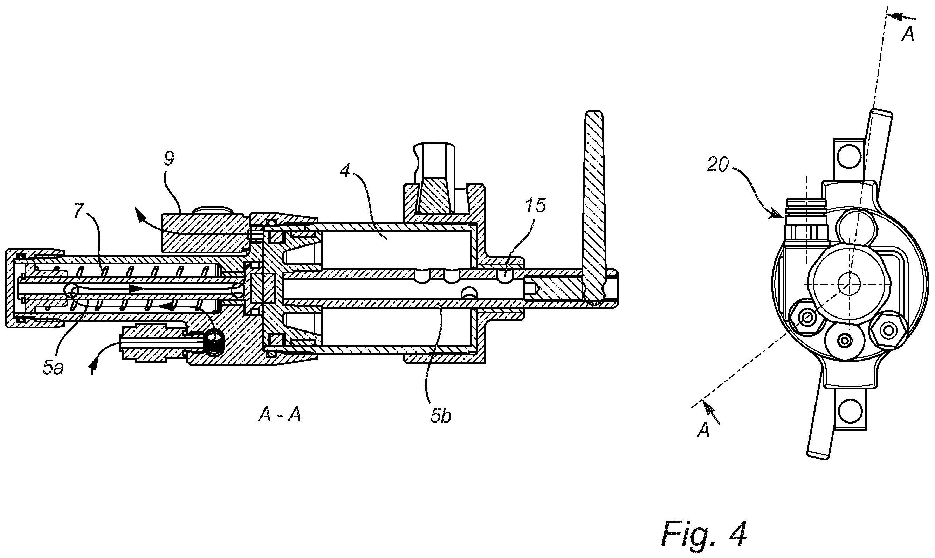

Accordingly, such an arrangement implies that a fluid connection is selectively present or not between the chambers during the reciprocating motion, or pumping. Hereby a flow of air from the first portion 3 (and hence from the connected shock absorber) to the second portion 4 is allowed to pass or in the opposite case no air is allowed to pass from the second portion 4 to the first portion 3. When said device is in the second state, a flow of oil from the first portion 3 (and hence from the reservoir) to the connected shock absorber is allowed as will be explained in the following description, with reference to Figure 4, of the stages, or steps, performed by a user filling a shock absorber utilizing the disclosed device. Figure 4 is a cross sectional view of an embodiment of the device according to the invention, which shows the flow of fluid through the device when in the first state.

### First stage: Achieving a vacuum in the connected shock absorber:

The first stage may be described as starting from a position wherein the rod arrangement 5 positioned substantially in the middle of cylinder 2, and accordingly connected by the magnetic coupling 13.

In a first motion (or stroke) the handle 8 and hence rod arrangement 5 are moved in a direction D towards the second end 2b of the cylinder 2. The rod 5a will follow due to the magnetic coupling for the first part of the stroke. Until the rods decouple due to the force of the biasing spring overcoming the magnetic force of the coupling, or a mechanical stop 16 is reached, the air from the shock absorber will flow from the shock absorber into the first portion 3 and further into the second portion 4. When the rods disconnect the fluid connection 14 between portions 3 and 4 is closed by the rod 5a returning to the first position FP1 due to the bias of spring 7.

In a second motion (or stroke) in a direction towards the first end 2a of the cylinder 2, the air now present in the second portion 4 will be pushed via fluid connection 9 into the surrounding ambient air by the second rod 5b.

In a preferred embodiment this first and second motion will create a sufficient vacuum in the shock absorber; however the cycle may be repeated if necessary to remove enough air from the shock absorber. Otherwise, the user will proceed to the second stage concerned with the filling of the connected shock absorber with oil.

### Second stage: Filling the connected shock absorber:

In the second stage, a valve 20 is switched opened to allow a flow of oil from the reservoir 12 to the first portion 3 of the device 1 and further into the shock absorber via the second fluid connection 11.

### Third stage (optional): Adjusting the oil level in the connected shock absorber.

Further, the device may comprise functionality for adjusting the oil level, or rather the position of a separating piston of the connected shock absorber. The flow adjusting mechanism 10 arranged on fluid connection 9, is then switched to a closed state. In such a case, the second rod 5b comprises at least one hole 15, in the illustrated case three holes 15, and at least one pin adapted to fit in said hole(s).

As a final adjustment stage, the user may retract the handle 8 and rod 5b to a desired position, prior to opening valve 20, place the pin in the chosen hole and thereby allow a final adjusting amount of oil to be transferred to the connected shock absorber in order to adjust the final oil level.
In analogy with the functionality of the device when extracting fluid, e.g. air or nitrogen gas, from the shock absorber, the device under the above described circumstances extracts an amount of fluid from the reservoir proportional to the position of the rod, predetermined by the arrangement of the at least one hole.

The fluid is hereby transferred from the reservoir to fill up the space of the hollow body determined by the retracted rod. When the rod arrangement is subsequently pushed back into the device, the oil is transferred into the connected device, e.g. a damper, such that the final oil level (i.e. the position of the separating piston) is set.

In other words, the at least one hole corresponds to a predetermined position for the separating piston. Accordingly, in an embodiment wherein the rod comprises a plurality of holes, a corresponding number of predetermined positions for the separating piston are available.

While specific embodiments have been described, the skilled person will understand that various modifications and alterations are conceivable within the scope as defined in the appended claims.

## Claims

1. Device (1) for filling a shock absorber for a vehicle with a first fluid, said shock absorber comprising a cylinder adapted to accommodate said first fluid, said device having a first state, wherein said device is adapted to provide a vacuum in said cylinder, **characterised in that**, said device is having a second state, wherein said device is adapted to fill
said cylinder with said first fluid, said device comprising:
- a hollow body (2) comprising a first body portion (3) and a second body portion (4);
- means for providing a fluid connection between said shock absorber and said hollow body; and
- at least one rod arrangement (5) arranged to extend at least partly through said first body portion and said second body portion, and adapted to reciprocate between at least first position (FP1) and a second position (FP2);
wherein, when in said first state, said rod arrangement is adapted to remove a second fluid from said cylinder to said hollow body to provide a vacuum in said cylinder, whereby said rod arrangement acts as a vacuum pump by means of said reciprocation between said at least first position (FP1) and said at least second position (FP2), such that a pressure equalization between said first and second body portion alternately takes place.

2. Device (1) according to claim 1, wherein said second fluid is a gaseous fluid such as air or nitrogen gas.

3. Device (1) according to any of the preceding claims, wherein, when in said second state, said rod arrangement is adapted to feed said first fluid from said hollow body (2) to said shock absorber

4. Device (1) according to any of claims 1-3, wherein said device comprises a first fluid connection (14) adapted to selectively allow a flow of fluid between said first and second body portions.

5. Device (1) according to any of claims 1-4, wherein said rod arrangement comprises a first rod (5a), arranged at least partly in said first body portion (3) and adapted to reciprocate between said first position (FP1) and said second position (FP2) and a second rod (5b), arranged at least partly in said second body portion (4) and adapted to reciprocate between a first position (SP1) and a second position (SP2), and wherein said rod arrangement comprises a releasable coupling (13) adapted to releasably couple said first and said second rod.

6. Device according to claim 5, wherein said releasable coupling is adapted to releasably couple the first rod and the second rod such that the rods are coupled at least when the first rod is in the first position (FP1) and the second rod is in the first position (SP1).

7. Device according to any of the claims 5-6, wherein said releasable coupling is adapted to releasably couple the first rod and the second rod such that the rods are decoupled at least when the second rod is in the second position (SP2).

8. Device according to any of claims 5-7, when dependent on claim 6, wherein said first fluid connection (14) allows a flow of fluid between said first and second body portions when said second rod (5b) is positioned in a predetermined position.

9. Device according to any of claims 5-8, when dependent on claim 6, wherein said first fluid connection (14) allows a flow of fluid between said first and second body portions when said first rod (5a) is positioned in a predetermined position.

10. Device according to any of the preceding claims, when dependent on claim 5, wherein a fluid flow is allowed to flow between said first body portion and said second body portion at least when said first rod is in said second position (FP2).

11. Device according to any of the preceding claims, when dependent on claim 5, wherein a fluid flow is substantially prevented to flow between said first body portion and said second body portion at least when said second rod is in said first position (SP1) or said first rod is in said first position (FP1).

12. Device according to any of claims 5-11, wherein said device comprises a spring (7) adapted to bias said first rod towards the first position.

13. Device (1) according to any of the preceding claims, wherein said device comprises a reservoir fluid connection (18), adapted to connect at least said first body portion (3) to a reservoir (12) when in said second state, said reservoir (12) adapted to comprise said first fluid.

14. Device (1) according to any of the preceding claims, wherein a second fluid connection (11), adapted to connect at least said first body portion (3) to said shock absorber cylinder, such that said first fluid may be transferred to said shock absorber cylinder.

15. Method for filling a shock absorber with a device according to claim 14, said method comprising:
- attaching said second fluid connection (11) to a shock absorber to be filled;
- setting said device in said first state;
- reciprocating said rod arrangement such that a vacuum is provided in said shock absorber via said fluid connection;
- switching said device to said second state;
- filling said shock absorber with said fluid via said fluid connection (11).

## Patentansprüche

1. Vorrichtung (1) zum Füllen eines Stoßdämpfers für ein Fahrzeug mit einem ersten Fluid, wobei der Stoßdämpfer einen Zylinder umfasst, der angepasst ist, um das erste Fluid aufzunehmen, wobei die Vorrichtung einen ersten Zustand hat, in dem die Vorrichtung angepasst ist, um ein Vakuum in dem Zylinder bereitzustellen, **dadurch gekennzeichnet, dass** die Vorrichtung einen zweiten Zustand hat, in dem die Vorrichtung angepasst ist, um den Zylinder mit dem ersten Fluid zu füllen, wobei die Vorrichtung Folgendes umfasst:
- einen Hohlkörper (2), der einen ersten Körperabschnitt (3) und einen zweiten Körperabschnitt (4) umfasst;
- Mittel zum Bereitstellen einer Fluidverbindung zwischen dem Stoßdämpfer und dem Hohlkörper; und
- mindestens eine Stangenanordnung (5), die eingerichtet ist, um sich mindestens teilweise durch den ersten Körperabschnitt und den zweiten Körperabschnitt zu erstrecken, und die angepasst ist, um zwischen mindestens ersten Position (FP1) und einer zweiten Position (FP2) eine Wechselbewegung auszuführen;
und wobei die Stangenanordnung in dem ersten Zustand angepasst ist, um ein zweites Fluid aus dem Zylinder zu dem Hohlkörper zu entfernen, um in dem Zylinder ein Vakuum bereitzustellen, wobei die Stangenanordnung als eine Vakuumpumpe mittels der Wechselbewegung zwischen der mindestens ersten Position (FP1) und der mindestens zweiten Position (FP2) wirkt, so dass ein Druckabgleich zwischen dem ersten und dem zweiten Körperabschnitt abwechselnd stattfindet.

2. Vorrichtung (1) nach Anspruch 1, wobei das zweite Fluid ein gasförmiges Fluid wie Luft oder Stickstoffgas ist.

3. Vorrichtung (1) nach einem der vorstehenden Ansprüche, wobei die Stangenanordnung in dem zweiten Zustand angepasst ist, um das erste Fluid aus dem Hohlkörper (2) zu dem Stoßdämpfer zuzuführen.

4. Vorrichtung (1) nach einem der Ansprüche 1 bis 3, wobei die Vorrichtung eine erste Fluidverbindung (14) umfasst, die angepasst ist, um selektiv einen Fluidfluss zwischen dem ersten und dem zweiten Körperabschnitt zu erlauben.

5. Vorrichtung (1) nach einem der Ansprüche 1 bis 4, wobei die Stangenanordnung eine erste Stange (5a) umfasst, die mindestens teilweise in dem ersten Körperabschnitt (3) eingerichtet und angepasst ist, um zwischen der ersten Position (FP1) und der zweiten Position (FP2) eine Wechselbewegung auszuführen, und eine zweite Stange (5b), die mindestens teilweise in dem zweiten Körperabschnitt (4) angeordnet und angepasst ist, um zwischen einer ersten Position (SP1) und einer zweiten Position (SP2) eine Wechselbewegung auszuführen, und wobei die Stangenanordnung eine freigebbare Kopplung (13) umfasst, die angepasst ist, um die erste und zweite Stange zu koppeln.

6. Vorrichtung nach Anspruch 5, wobei die freigebbare Kopplung angepasst ist, um die erste Stange und die zweite Stange derart freigebbar zu koppeln, dass die Stangen mindestens gekoppelt sind, wenn die erste Stange in der ersten Position (FP1) ist und die zweite Stange in der ersten Position (SP1) ist.

7. Vorrichtung nach einem der Ansprüche 5-6, wobei die freigebbare Kopplung angepasst ist, um die erste Stange und die zweite Stange derart freigebbar zu koppeln, dass die Stangen mindestens abgekoppelt sind, wenn die zweite Stange in der zweiten Position (SP2) ist.

8. Vorrichtung nach einem der Ansprüche 5 bis 7, wenn sie von Anspruch 6 abhängig sind, wobei die erste Fluidverbindung (14) einen Fluidfluss zwischen dem ersten und dem zweiten Körperabschnitt erlaubt, wenn die zweite Stange (5b) in einer vorbestimmten Position positioniert ist.

9. Vorrichtung nach einem der Ansprüche 5 bis 8, wenn sie von Anspruch 6 abhängig sind, wobei die erste Fluidverbindung (14) einen Fluidfluss zwischen dem ersten und dem zweiten Körperabschnitt erlaubt, wenn die erste Stange (5a) in einer vorbestimmten Position positioniert ist.

10. Vorrichtung nach einem der vorstehenden Ansprüche, wenn sie von Anspruch 5 abhängt, wobei es einem Fluidfluss erlaubt ist, zwischen dem ersten Körperabschnitt und dem zweiten Körperabschnitt mindestens zu fließen, wenn die erste Stange in der zweiten Position (FP2) ist.

11. Vorrichtung nach einem der vorstehenden Ansprüche, wenn sie von Anspruch 5 abhängig, wobei ein Fluidfluss im Wesentlichen am Fließen zwischen dem ersten Körperabschnitt und dem zweiten Körperabschnitt mindestens verhindert wird, wenn die zweite Stange in der ersten Position (SP1) ist oder die erste Stange in der ersten Position (FP1) ist.

12. Vorrichtung nach einem der Ansprüche 5 bis 11, wobei die Vorrichtung eine Feder (7) umfasst, die angepasst ist, um die erste Stange zu der ersten Position vorzuspannen.

13. Vorrichtung (1) nach einem der vorstehenden Ansprüche, wobei die Vorrichtung eine Behälterfluidverbindung (18) umfasst, der angepasst ist, um mindestens den ersten Körperabschnitt (3) mit einem Behälter (12) in dem zweiten Zustand zu verbinden, wobei der Behälter (12) angepasst ist, um das erste Fluid zu enthalten.

14. Vorrichtung (1) nach einem der vorstehenden Ansprüche, wobei eine zweite Fluidverbindung (11) angepasst ist, um mindestens den ersten Körperabschnitt (3) mit dem Stoßdämpferzylinder derart zu verbinden, dass das erste Fluid zu dem Stoßdämpferzylinder transferiert werden kann.

15. Verfahren zum Füllen eines Stoßdämpfers mit einer Vorrichtung nach Anspruch 14, wobei das Verfahren Folgendes umfasst:
- Anbringen der zweiten Fluidverbindung (11) an einem zu füllenden Stoßdämpfer;
- Versetzen der Vorrichtung in den ersten Zustand;
- Wechselbewegung der Stangenanordnung derart, dass ein Vakuum in dem Stoßdämpfer über die Fluidverbindung bereitgestellt wird;
- Umschalten der Vorrichtung zu dem zweiten Zustand;
- Füllen des Stoßdämpfers mit dem Fluid über die Fluidverbindung (11).

## Revendications

1. Dispositif (1) de remplissage d'un absorbeur de chocs pour un véhicule avec un premier fluide, ledit absorbeur de chocs comprenant un cylindre adapté pour recevoir ledit premier fluide, ledit dispositif ayant un premier état, dans lequel ledit dispositif est adapté pour fournir un vide dans ledit cylindre, **caractérisé en ce que** ledit dispositif a un deuxième état, dans lequel ledit dispositif est adapté pour remplir ledit cylindre avec ledit premier fluide, ledit dispositif comprenant :
- un corps creux (2) comprenant une première partie de corps (3) et une deuxième partie de corps (4) ;
- un moyen pour fournir une connexion fluidique entre ledit absorbeur de chocs et ledit corps creux ; et
- au moins un agencement de tiges (5) agencé pour s'étendre au moins partiellement à travers ladite première partie de corps et ladite deuxième partie de corps, et adapté pour effectuer un mouvement réciproque entre au moins une première position (FP1) et une deuxième position (FP2) ;
dans lequel, lorsque dans ledit premier état, ledit agencement de tiges est adapté pour retirer un deuxième fluide dudit cylindre vers ledit corps creux pour fournir un vide dans ledit cylindre, ce par quoi ledit agencement de tiges agit en tant qu'une pompe à vide au moyen dudit mouvement réciproque entre ladite au moins une première position (FP1) et ladite au moins une deuxième position (FP2), de telle façon qu'un équilibrage de pression entre lesdites première et deuxième parties de corps a lieu alternativement.

2. Dispositif (1) selon la revendication 1, dans ledit deuxième fluide est un fluide gazeux tel que l'air ou l'azote gazeux.

3. Dispositif (1) selon l'une quelconque des revendications précédentes, dans lequel, lorsque dans ledit deuxième état, ledit agencement de tiges est adapté pour alimenter ledit premier fluide dudit corps creux (2) vers ledit absorbeur de chocs.

4. Dispositif (1) selon l'une quelconque des revendications 1 - 3, dans lequel ledit dispositif comprend une première connexion fluidique (14) adaptée pour permettre de façon sélective un écoulement fluidique entre lesdites première et deuxième parties de corps.

5. Dispositif (1) selon l'une quelconque des revendications 1 - 4, dans lequel ledit agencement de tiges comprend une première tige (5a) agencée au moins partiellement dans ladite première partie de corps (3) et adaptée pour effectuer un mouvement réciproque entre ladite première position (FP1) et ladite deuxième position (FP2), et une deuxième tige (5b), agencée au moins partiellement dans ladite deuxième partie de corps (4) et adaptée pour effectuer un mouvement réciproque entre une première position (SP1) et une deuxième position (SP2), et dans lequel ledit agencement de tiges comprend un couplage séparable (13) adapté pour coupler de manière libérable lesdites première et deuxième tiges.

6. Dispositif selon la revendication 5, dans lequel ledit couplage libérable est adapté pour coupler de manière libérable la première tige et la deuxième tige de telle façon que les tiges sont couplées au moins lorsque la première tige est dans la première position (FP1) et la deuxième tige est dans la première position (SP1).

7. Dispositif selon l'une quelconque des revendications 5-6, dans lequel ledit couplage séparable est adapté pour coupler de façon libérable la première tige et la deuxième tige de telle façon que les tiges soient découplées au moins lorsque la deuxième tige est dans la deuxième position (SP2).

8. Dispositif selon l'une quelconque des revendications 5-7, lorsque dépendant de la revendication 6, dans lequel ladite première connexion fluidique (14) permet un écoulement fluidique entre lesdites première et deuxième parties de corps lorsque ladite deuxième tige (5b) est positionnée dans une position prédéterminée.

9. Dispositif selon l'une quelconque des revendications 5-8, lorsque dépendant de la revendication 6, dans lequel ladite première connexion fluidique (14) permet un écoulement fluidique entre lesdites première et deuxième parties de corps lorsque ladite première tige (5a) est positionnée dans une position prédéterminée.

10. Dispositif selon l'une quelconque des revendications précédentes, lorsque dépendant de la revendication 5, dans lequel un écoulement fluidique peut s'écouler entre ladite première partie de corps et ladite deuxième partie de corps au moins lorsque ladite première tige est dans ladite deuxième position (FP2).

11. Dispositif selon l'une quelconque des revendications précédentes, lorsque dépendant de la revendication 5, dans lequel un écoulement fluidique est essentiellement empêché de s'écouler entre ladite première partie de corps et ladite deuxième partie de corps au moins lorsque ladite deuxième tige est dans ladite première position (SP1) ou ladite première tige est dans ladite première position (FP1).

12. Dispositif selon l'une quelconque des revendications 5-11, dans lequel ledit dispositif comprend un ressort (7) pour décaler ladite première tige vers la première position.

13. Dispositif (1) selon l'une quelconque des revendications précédentes, dans lequel ledit dispositif comprend une connexion fluidique de réservoir (18), adaptée pour connecter au moins ladite première partie de corps (3) à un réservoir (12) lorsque dans ledit deuxième état, ledit réservoir (12) adapté pour comprendre ledit premier fluide.

14. Dispositif (1) selon l'une quelconque des revendications précédentes, dans lequel une deuxième connexion fluidique (11), adaptée pour connecter au moins ladite première partie de corps (3) audit cylindre absorbeur de chocs, de telle façon que ledit premier fluide peut être transféré vers ledit cylindre absorbeur de chocs.

15. Procédé de remplissage d'un absorbeur de chocs avec un dispositif selon la revendication 14, ledit procédé comprenant :
- de fixer ladite deuxième connexion fluidique (11) à un absorbeur de chocs à remplir ;
- de mettre ledit dispositif dans ledit premier état ;
- d'effectuer un mouvement réciproque dudit agencement de tiges de telle façon qu'un vide est fourni dans ledit absorbeur de chocs par le biais de ladite connexion fluidique ;
- de basculer ledit dispositif vers ledit deuxième état ;
- de remplir ledit absorbeur de chocs avec ledit fluide par le biais de ladite connexion fluidique (11).
